# EUROPEAN PATENT APPLICATION

(11) **EP 4 336 715 A1**
(43) Date of publication of application: **13.03.2024**
(21) Application number: 22837477.3
(22) Date of filing: 22.06.2022
(51) Int. Cl.: H02K 15/04, B23K 26/21, H02K 15/085

(54) **ELECTRIC MOTOR STATOR MANUFACTURING DEVICE AND METHOD FOR MANUFACTURING ELECTRIC MOTOR STATOR**

(30) Priority: 09.07.2021 JP 2021114099
(71) Applicant: AISIN CORPORATION, Kariya-shi, Aichi 448-8650 (JP)
(72) Inventor: HASHIMOTO, Shingo, Kariya-shi, Aichi 448-8650 (JP); ONO, Hiroyuki, Kariya-shi, Aichi 448-8650 (JP); MATSUBARA, Tetsuya, Kariya-shi, Aichi 448-8650 (JP)
(74) Representative: Kramer Barske Schmidtchen Patentanwälte PartG mbB
(86) International application number: PCT/JP2022/024861
(87) International publication number: WO 2023/282060

(57) **Abstract**

A device for manufacturing a stator for a rotating electrical machine is disclosed. The device includes: a jig configured to create a state in which distal ends of one conductor piece and another conductor piece for forming the stator of the rotating electrical machine are in contact with each other and to form a tubular cavity that exposes the distal ends in contact with each other to outside; a laser radiation means configured to apply a laser beam from the outside through the cavity toward the distal ends in contact with each other; and a gas supply means configured to supply gas to the cavity.

## Description

### TECHNICAL FIELD

The present disclosure relates to devices for manufacturing a stator for a rotating electrical machine and methods for manufacturing a stator for a rotating electrical machine.

### BACKGROUND ART

A method for manufacturing a stator is known in which ends of one coil piece and another coil piece for forming a stator coil of a rotating electrical machine are brought into contact each other and clamped together, and the ends are welded together by applying a laser beam to a welding target portion between the ends that are in contact with each other (see, for example, Patent Document 1).

### Related Art Documents

### Patent Documents

Patent Document 1: Japanese Unexamined Patent Application Publication No. 2020-48359 (JP 2020-48359 A)

### SUMMARY OF THE INVENTION

### Problem to be Solved by the Invention

When laser-welding the ends of the coil pieces as described above, it is necessary to apply a laser beam from a laser radiation means with the welding target portion exposed to the laser radiation means. It is therefore important from the standpoint of improving welding quality to create an appropriate spatial environment for a laser radiation path from the laser radiation means to the welding target portion.

Accordingly, in one aspect, an object of the present disclosure is to improve the welding quality by creating an appropriate spatial environment for a laser radiation path from a laser radiation means to a welding target portion.

### Means for Solving the Problem

In one aspect, a device for manufacturing a stator for a rotating electrical machine is provided which includes: a jig configured to create a state in which distal ends of one conductor piece and another conductor piece for forming the stator of the rotating electrical machine are in contact with each other and to form a tubular cavity that exposes the distal ends in contact with each other to outside; a laser radiation means configured to apply a laser beam from the outside through the cavity toward the distal ends in contact with each other; and a gas supply means configured to supply gas to the cavity.

### Effects of the Invention

According to the present disclosure, it is possible to improve the welding quality by creating an appropriate spatial environment for a laser radiation path from the laser radiation means to a welding target portion.

### BRIEF DESCRIPTION OF THE DRAWINGS

[FIG. 1] FIG. 1 is a sectional view schematically showing a sectional structure of a motor according to an embodiment.
[FIG. 2] FIG. 2 is a plan view of a stator core alone.
[FIG. 3] FIG. 3 is a diagram schematically showing a pair of coil pieces that is installed in the stator core.
[FIG. 4] FIG. 4 is a perspective view of a portion around a coil end of a stator.
[FIG. 5] FIG. 5 is a perspective view showing some of coil pieces of the same phase.
[FIG. 6] FIG. 6 is a schematic front view of one coil piece.
[FIG. 7] FIG. 7 is a diagram showing joined distal ends of coil pieces and portions near the distal ends.
[FIG. 8] FIG. 8 is a sectional view taken along line A-A in FIG. 7 passing through a welding target portion.
[FIG. 9] FIG. 9 is a schematic diagram of a manufacturing device including a jig.
[FIG. 10] FIG. 10 is an exploded perspective view of the jig.
[FIG. 11] FIG. 11 show two orthographic views of the jig, namely a side view and a sectional view showing a section taken along line B-B.
[FIG. 12] FIG. 12 shows three orthographic views of the jig, namely a plan view and sectional views along two directions.
[FIG. 13] FIG. 13 is a flowchart schematically showing the flow of a manufacturing method.
[FIG. 14] FIG. 14 is an illustration of a gas supply step of the manufacturing method.
[FIG. 15] FIG. 15 is an illustration of the gas supply step of the manufacturing method.
[FIG. 16] FIG. 16 is an illustration of a welding step of the manufacturing method.
[FIG. 17] FIG. 17 is an illustration of the welding step of the manufacturing method.
[FIG. 18] FIG. 18 is an illustration of another applicable welding target portion.
[FIG. 19] FIG. 19 is an illustration schematically showing another jig configuration.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings are sometimes partially exaggerated for convenience of description. In this specification, the term "predetermined" is used in the sense of "decided in advance."

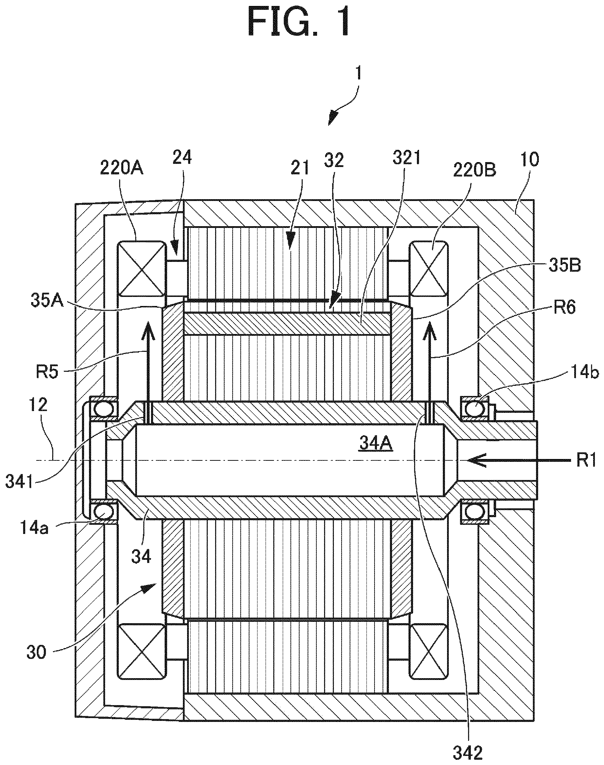

FIG. 1 is a sectional view schematically showing a sectional structure of a motor 1 according to an embodiment.

FIG. 1 shows a rotation axis 12 of the motor 1. In the following description, the axial direction refers to a direction in which the rotation axis (central axis) 12 of the motor 1 extends, and the radial direction refers to a radial direction about the rotation axis 12. Therefore, the "radially outer side" and "radially outward" refer to a side away from the rotation axis 12, and the "radially inner side" and "radially inward" refers to a side toward the rotation axis 12. The circumferential direction corresponds to a rotation direction about the rotation axis 12.

The motor 1 may be a vehicle drive motor that is used in, for example, a hybrid electric vehicle or a battery electric vehicle. However, the motor 1 may be used for any other purposes.

The motor 1 is of an inner rotor type, and a stator 21 is provided so as to surround the radially outer side of a rotor 30. The radially outer side of the stator 21 is fixed to a motor housing 10. The central axis of the stator 21 is the same as the rotation axis 12.

The rotor 30 is disposed radially inward of the stator 21. The rotor 30 includes a rotor core 32 and a rotor shaft 34. The rotor core 32 is fixed to the radially outer side of the rotor shaft 34 and rotates with the rotor shaft 34. The rotor shaft 34 is rotatably supported by the motor housing 10 via bearings 14a, 14b. The rotor shaft 34 defines the rotation axis 12 of the motor 1.

The rotor core 32 is made of, for example, magnetic steel laminations having an annular shape. Permanent magnets 321 are inserted inside the rotor core 32. The number, arrangement, etc. of permanent magnets 321 may be determined as appropriate. In a modification, the rotor core 32 may be made of a green compact obtained by pressing and compacting magnetic powder.

End plates 35A, 35B are attached to both sides in the axial direction of the rotor core 32. The end plates 35A, 35B may have a function to adjust an imbalance of the rotor 30 (function to eliminate the imbalance by being cut etc.) in addition to a support function to support the rotor core 32.

As shown in FIG. 1, the rotor shaft 34 has a hollow portion 34A. The hollow portion 34A extends along the entire axial length of the rotor shaft 34. The hollow portion 34A may function as an oil passage. For example, oil is supplied to the hollow portion 34A from its one axial end as shown by arrow R1 in FIG. 1, and the oil flows along the radially inner surface of the rotor shaft 34, so that the rotor core 32 can be cooled from the radially inner side. The oil flowing along the radially inner surface of the rotor shaft 34 may be ejected radially outward through oil holes 341, 342 formed in both ends of the rotor shaft 34 (arrows R5, R6) to cool coil ends 220A, 220B.

Although the motor 1 having a specific structure is shown in FIG. 1, the motor 1 may be have any structure as long as it has a stator coil 24 (described later) joined by welding. Accordingly, for example, the rotor shaft 34 may not have the hollow portion 34A, or may have a hollow portion with a significantly smaller inside diameter than the hollow portion 34A. While a specific cooling method is disclosed in FIG. 1, the motor 1 may be cooled by any method. Therefore, for example, an oil introduction pipe inserted into the hollow portion 34A may be provided, or oil may be dropped from an oil passage in the motor housing 10 from the radially outer side toward the coil ends 220A, 220B.

Although FIG. 1 shows the inner rotor motor 1 in which the rotor 30 is disposed inside the stator 21, the present disclosure may be applied to other types of motors. For example, the present disclosure may be applied to an outer rotor motor in which the rotor 30 is concentrically disposed outside the stator 21, or a dual rotor motor in which the rotor 30 is disposed both outside and inside the stator 21.

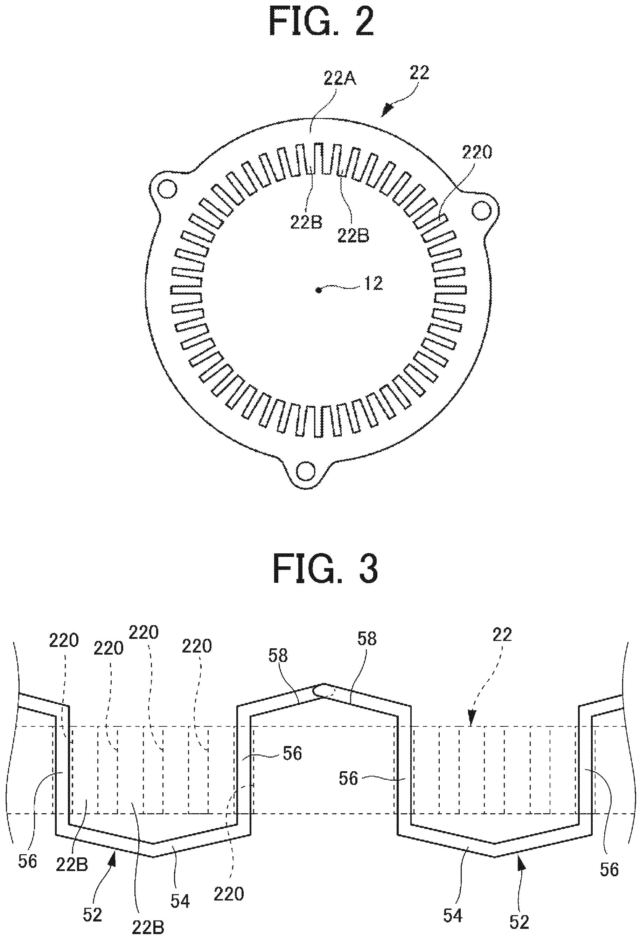

Next, the configuration related to the stator 21 will be described in detail with reference to FIG. 2 and the subsequent figures.

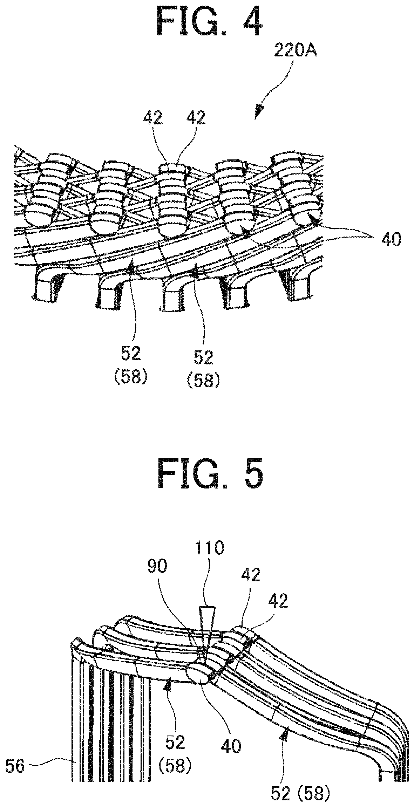

FIG. 2 is a plan view of a stator core 22 alone. FIG. 3 is a diagram schematically showing a pair of coil pieces 52 that is installed in the stator core 22. FIG. 3 shows the relationship between the pair of coil pieces 52 and slots 220 on the radially inner side of the stator core 22 shown opened out flat. In FIG. 3, the stator core 22 is shown by dashed lines, and some of the slots 220 are not shown. FIG. 4 is a perspective view of a portion around the coil end 220A of the stator 21. FIG. 5 is a perspective view showing some of coil pieces 52 of the same phase.

The stator 21 includes the stator core 22 and the stator coil 24 (see FIG. 1).

The stator core 22 is made of, for example, magnetic steel laminations having an annular shape. In a modification, however, the stator core 22 may be made of a green compact obtained by pressing and compacting magnetic powder. The stator core 22 may be segmented in the circumferential direction and composed of segment cores, or may not be segmented in the circumferential direction. The plurality of slots 220 in which the stator coil 24 is wound is formed on the radially inner side of the stator core 22. Specifically, as shown in FIG. 2, the stator core 22 includes an annular back yoke 22A and a plurality of teeth 22B extending radially inward from the back yoke 22A, and the slots 220 are formed between the plurality of teeth 22B in the circumferential direction. Although any number of slots 220 may be formed, 48 slots 220 are formed as an example in the present embodiment.

The stator coil 24 includes a U-phase coil, a V-phase coil, and a W-phase coil (hereinafter referred to as "phase coils" when the phases U, V, and W are not distinguished from each other). The starting end of each phase coil is connected to an input terminal (not shown). The finishing end of each phase coil is connected to the finishing ends of the other phase coils to form a neutral point of the motor 1. That is, the stator coil 24 is connected in a star connection. However, the manner of connection of the stator coil 24 may be changed as appropriate according to the required motor characteristics etc. For example, the stator coil 24 may be connected in a delta connection instead of the star connection.

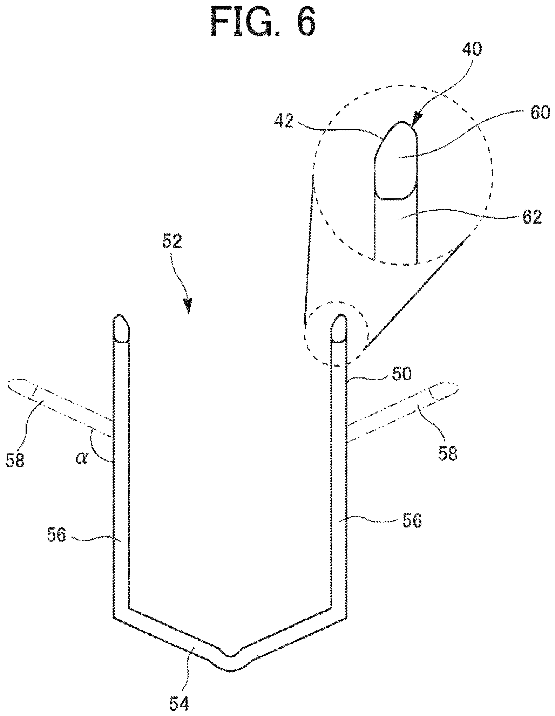

Each phase coil is formed by joining a plurality of coil pieces 52. FIG. 6 is a schematic front view of one coil piece 52. The coil pieces 52 are in the form of segment coils obtained by segmenting the phase coils into units that are easy to install (e.g., units each to be inserted into two slots 220). The coil piece 52 is formed by coating a linear conductor (rectangular wire) 60 having a rectangular cross section with an insulating coating 62. In the present embodiment, the linear conductor 60 is made of, for example, copper. In a modification, the linear conductor 60 may be made of a different conductor material such as iron.

Before being installed in the stator core 22, the coil piece 52 may be formed into a generally U-shape having a pair of straight portions 50 and a connecting portion 54 connecting the pair of straight portions 50. When installing the coil piece 52 in the stator core 22, the pair of straight portions 50 is inserted into the slots 220 (see FIG. 3). As shown in FIG. 3, the connecting portion 54 thus extends in the circumferential direction across a plurality of teeth 22B (and therefore a plurality of slots 220) at the other axial end of the stator core 22. Although the connecting portion 54 may extend across any number of slots 220, the connecting portion 54 extends across three slots 220 in FIG. 3. After being inserted into the slots 220, the straight portions 50 are bent in the circumferential direction at an intermediate position, as shown by long dashed double-short dashed lines in FIG. 6. Each straight portion 50 is thus turned into a leg portion 56 extending in the axial direction in the slot 220 and a crossover portion 58 extending in the circumferential direction at one axial end of the stator core 22.

In FIG. 6, the pair of straight portions 50 is bent away from each other. However, the present disclosure is not limited to this. For example, the pair of straight portions 50 may be bent toward each other. The stator coil 24 may also have a neutral point coil piece etc. that connects the finishing ends of the three-phase coils to form a neutral point.

A plurality of leg portions 56 of the coil pieces 52 shown in FIG. 6 is inserted into one slot 220 side by side in the radial direction. A plurality of crossover portions 58 extending in the circumferential direction is thus located side by side in the radial direction at the one axial end of the stator core 22. As shown in FIGS. 3 and 5, the crossover portion 58 of one coil piece 52 protruding from one slot 220 and extending toward one side in the circumferential direction is joined to the crossover portion 58 of another coil piece 52 protruding from another slot 220 and extending toward the other side in the circumferential direction.

Each coil piece 52 is covered with the insulating coating 62 as described above, but the insulating coating 62 is removed only from its distal ends 40. This is to ensure electrical connection with other coil pieces 52 at the distal ends 40.

As shown in FIGS. 5 and 6, an end face of each distal end 40 of the coil piece 52 that eventually becomes an axial outer end face 42, that is, one end face in the width direction of the coil piece 52 (axial outer end face 42), is an arc-shaped surface that is convex outward in the axial direction.

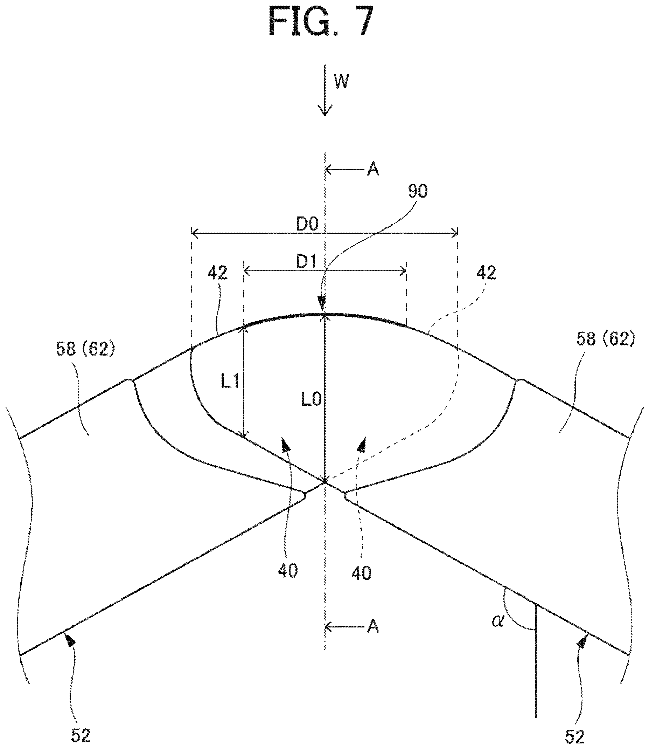

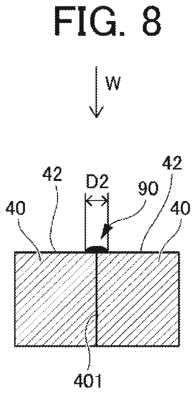

FIG. 7 is a diagram showing the joined distal ends 40 of the coil pieces 52 and the portions near the distal ends 40. FIG. 7 schematically shows a circumferential range D1 of a welding target portion 90. FIG. 8 is a sectional view taken along line A-A in FIG. 7 passing through the welding target portion 90.

When joining the distal ends 40 of the coil pieces 52, the distal ends 40 of one coil piece 52 and another coil piece 52 are butted against each other so as to form a C-shape in the view shown in FIG. 7 (as viewed in a direction perpendicular to a contact surface 401). At this time, the two distal ends 40 to be joined together may be laid side by side in the thickness direction and joined together such that the central axes of the arc-shaped surfaces (axial outer end faces 42) coincide with each other. By laying the two distal ends 40 side by side with the central axes coinciding with each other, the axially outer sides of the two distal ends 40 to be joined together are aligned with each other and the two distal ends 40 can be appropriately laid side by side even when a bending angle α is relatively large or small.

In this case, the welding target portion 90 extends linearly along the contact surface 401 as shown by the range D1 and a range D2. That is, the welding target portion 90 extends linearly along the range D1 with a width of the range D2, as viewed from the emission side of a laser beam 110 (see arrow W in FIGS. 7 and 8).

In the present embodiment, the joining method for joining the distal ends 40 of the coil pieces 52 is welding. In the present embodiment, the welding method is laser welding using a laser beam source as a heat source, rather than arc welding represented by TIG welding. The axial length of the coil ends 220A, 220B can be reduced by using the laser welding instead of the TIG welding. That is, in the case of the TIG welding, the distal ends of the coil pieces to be brought into contact with each other need to be bent axially outward so as to extend in the axial direction. In the case of the laser welding, however, such bending is not necessary, and as shown in FIG. 7, welding can be implemented with the distal ends 40 of the coil pieces 52 to be brought into contact with each other extending in the circumferential direction. The axial length of the coil ends 220A, 220B can thus be reduced compared to the case where the distal ends 40 of the coil pieces 52 to be brought into contact with each other are bent axially outward so as to extend in the axial direction.

In the laser welding, as schematically shown in FIG. 5, the welding laser beam 110 is applied to the welding target portion 90 in the two distal ends 40 that are in contact with each other. The radiation direction (propagation direction) of the laser beam 110 is substantially parallel to the axial direction, and is a direction from outside in the axial direction toward the axial outer end faces 42 of the two distal ends 40 that are in contact with each other. In the case of the laser welding, heating can be locally performed. Therefore, only the distal ends 40 and the portions near the distal ends 40 can be heated, and damage (carbonization) etc. to the insulating coating 62 can be effectively reduced. As a result, the plurality of coil pieces 52 can be electrically connected while maintaining appropriate insulation performance.

As shown in FIG. 7, the circumferential range D1 of the welding target portion 90 is the contact portion between the distal ends 40 of the two coil pieces 52 excluding both ends of an entire circumferential range D0 of the axial outer end faces 42. This is because it is difficult to ensure a sufficient welding depth (see dimension L1 in FIG. 7) at the both ends due to the convex arc surfaces of the axial outer end faces 42. The circumferential range D1 of the welding target portion 90 may be adapted so as to ensure a required joining area between the coil pieces 52, required welding strength, etc.

As shown in FIG. 8, the radial range D2 of the welding target portion 90 is centered about the contact surface 401 between the distal ends 40 of the two coil pieces 52. The radial range D2 of the welding target portion 90 may correspond to the diameter of the laser beam 110 (beam diameter). That is, the laser beam 110 is applied in such a manner that the radiation position changes linearly in the circumferential direction without substantially changing in the radial direction. In other words, the laser beam 110 is moved so that the radiation position changes in a linear pattern parallel to the contact surface 401. The laser beam 110 can thus be more efficiently applied to the linear welding target portion 90 compared to the case where the radiation position is changed in, for example, a loop (spiral) or zigzag (meandering) pattern.

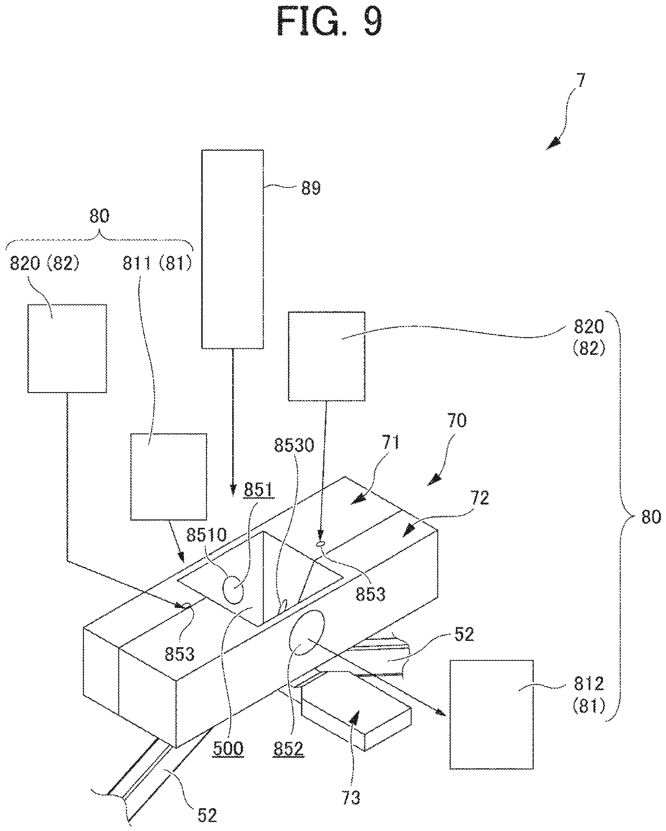

Next, a manufacturing device 7 including a jig 70 suitable for laser welding the distal ends 40 of the coil pieces 52 as part of a device for manufacturing the stator 21 will be described with reference to FIG. 9 and the subsequent figures.

FIG. 9 is a schematic diagram of the manufacturing device 7 including the jig 70. FIG. 9 schematically shows a part (portion including the distal end 40) of each of a pair of coil pieces 52 to be joined together.

As shown in FIG. 9, the manufacturing device 7 includes the jig 70, a gas supply means 80, and a laser radiation means 89.

The jig 70 brings the pair of coil pieces 52 into the state in which the distal end 40 of one coil piece 52 and the distal end 40 of the other coil piece 52 are in contact with each other, and keeps the distal ends 40 in contact with each other. That is, the jig 70 clamps the pair of coil pieces 52 so that the distal ends 40 of the pair of coil pieces 52 are kept in contact with each other. Although only a part of the jig 70 related to the distal ends 40 of one pair of coil pieces 52 is illustrated below, the jig 70 may be configured to clamp the distal ends 40 of a plurality of pairs (e.g., 12 pairs) of coil pieces 52 simultaneously. In this case, the jig 70 may be formed in such a manner that a plurality of the configurations shown in FIG. 9 is connected in the circumferential direction. In this case, the jig 70 may simultaneously form separate cavities 500 for each of the plurality of pairs of coil pieces 52. In the case of the configuration in which the distal ends 40 of a plurality of pairs (e.g., 12 pairs) of coil pieces 52 are clamped simultaneously, the lead time of the welding process can be efficiently reduced compared to the case where the distal ends 40 are clamped one pair of coil pieces 52 at a time.

The jig 70 forms a tubular cavity 500 that exposes the distal ends 40 of the pair of coil pieces 52 (distal ends 40 in contact with each other) to the outside in a clamped state in which the pair of coil pieces 52 is restrained as described above. That is, the jig 70 restrains the pair of coil pieces 52 as described above, and at the same time, forms the tubular cavity 500 that exposes the distal ends 40 of the pair of coil pieces 52 to the outside. The cavity 500 forms a path (laser radiation path) for the laser beam 110 from the laser radiation means 89 to the welding target portion 90 of the distal ends 40. Preferably, the cavity 500 is open only on the side on which the laser beam 110 from the laser radiation means 89 is incident. However, in the case where the jig 70 is formed by two or more jig members (in the present embodiment, three jig members 71, 72, and 73 as described later) that move relative to each other, the jig 70 may have a small space due to the clearance between the jig members.

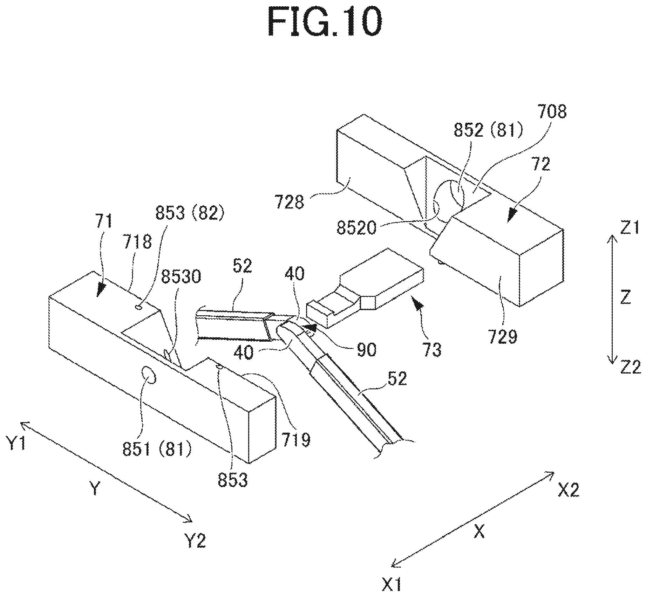

In the present embodiment, the jig 70 includes the three jig members 71, 72, and 73 that are movable relative to each other. The configuration of each jig member 71, 72, 73 will be described in detail with reference to FIG. 10 and the subsequent figures.

The gas supply means 80 supplies gas to the cavity 500. A desired gas environment can be created inside the cavity 500 by appropriately supplying gas to the cavity 500. As described above, according to the present embodiment, the manufacturing device includes the gas supply means 80. It is therefore possible to create an appropriate spatial environment for the laser radiation path from the laser radiation means 89 to the welding target portion 90.

In the present embodiment, the gas supply means 80 includes a first gas supply means 81 and a second gas supply means 82.

The first gas supply means 81 supplies air as a gas to the cavity 500. The air supplied by the first gas supply means 81 mainly functions to remove matter to be removed such as spatter and soot that may be generated during laser welding from inside the cavity 500. Spatter refers to metal particles etc. that are scattered due to disturbance of molten pool etc. The gas that is supplied by the first gas supply means 81 is suitably air from the standpoint of cost. However, other gases such as nitrogen may be used, or a mixture of air and other gas(es) may be used.

The first gas supply means 81 preferably generates either or both of positive and negative pressures that force air out of the cavity 500. In the present embodiment, the first gas supply means 81 includes a positive pressure source 811 and a negative pressure source 812 in order to generate both the positive and negative pressures that force air out of the cavity 500.

The positive pressure source 811 is a so-called air blow source and produces a flow of air to be injected into the cavity 500. The positive pressure source 811 may be a compressor, a fan, a blower, etc.

The negative pressure source 812 is a so-called vacuum source, and generates a negative pressure to draw air out of the cavity 500. The negative pressure source 812 may be a vacuum pump, a vacuum blower, an ejector (vacuum generator), etc.

In this case, the first gas supply means 81 can use the positive pressure source 811 to form an air flow that blows spatter out of the cavity 500, and can use the negative pressure source 812 to draw (purge) air out of the cavity 500. Spatter that may be generated during laser welding can thus be effectively removed from inside the cavity 500.

The pipe configuration for connecting each of the positive pressure source 811 and the negative pressure source 812 of the first gas supply means 81 to the cavity 500 will be described in detail with reference to FIG. 10 and the subsequent figures.

The second gas supply means 82 supplies an inert gas to the cavity 500. The inert gas that is supplied by the second gas supply means 82 mainly functions as a shielding gas (gas that prevents oxidation, nitridation, etc. of molten metal). The inert gas may be nitrogen, argon, helium, etc., although any inert gas can be used. In this case, welding quality can be effectively improved by the inert gas functioning as a shielding gas. In a modification, carbon dioxide gas may be used instead of or in addition to the inert gas.

The second gas supply means 82 includes an inert gas source 820. The inert gas source 820 may be in the form of a tank etc. that stores an inert gas or its source. The pipe configuration for connecting the inert gas source 820 of the second gas supply means 82 to the cavity 500 will be described in detail with reference to FIG. 10 and the subsequent figures.

The laser radiation means 89 emits the laser beam 110 described above. The position of the laser radiation means 89 relative to a fixed reference position of the jig 70 may be either changed or fixed. That is, the laser radiation means 89 may be either a movable means or a stationary means.

Although the laser beam 110 emitted from the laser radiation means 89 may have any wavelength, the wavelength of the laser beam 110 is preferably a wavelength that forms a green laser. The "green laser" is a concept including not only a laser with a wavelength of 532 nm, that is, an SHG (Second Harmonic Generation: second harmonic) laser but also lasers with wavelengths close to 532 nm. In a modification, a laser with a wavelength of 0.6 µm or less that does not belong to the category of the green laser may be used. The wavelength of the green laser can be obtained by, for example, converting a fundamental wavelength generated by an YAG laser or an YVO4 laser through an oxide single crystal (e.g., LBO: lithium triborate).

In a modification, an infrared laser (laser with a wavelength of 1064 nm) may be used. However, copper that is a material of the linear conductor 60 of the coil piece 52 has an absorptivity as low as about 10% for the infrared laser. That is, in the case of the infrared laser, most of the laser beam 110 is reflected and not absorbed by the coil piece 52. Therefore, a relatively large amount of heat input is required in order to obtain a required joining area between the coil pieces 52 to be joined, and welding may become unstable due to the high heat effect.

Copper that is a material of the linear conductor 60 of the coil piece 52 has an absorptivity as high as about 50% for the green laser. Therefore, according to the present embodiment, a required joining area between the coil pieces 52 can be obtained with a smaller amount of heat input than in the case of using the infrared laser.

Next, the configuration of the jig 70 of the present embodiment will further be described with reference to FIGS. 10 to 12.

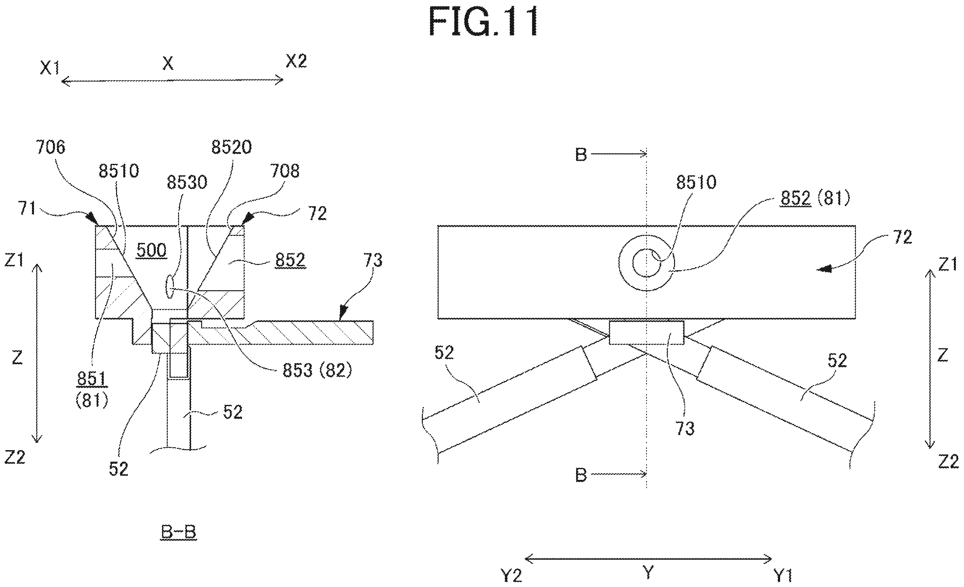

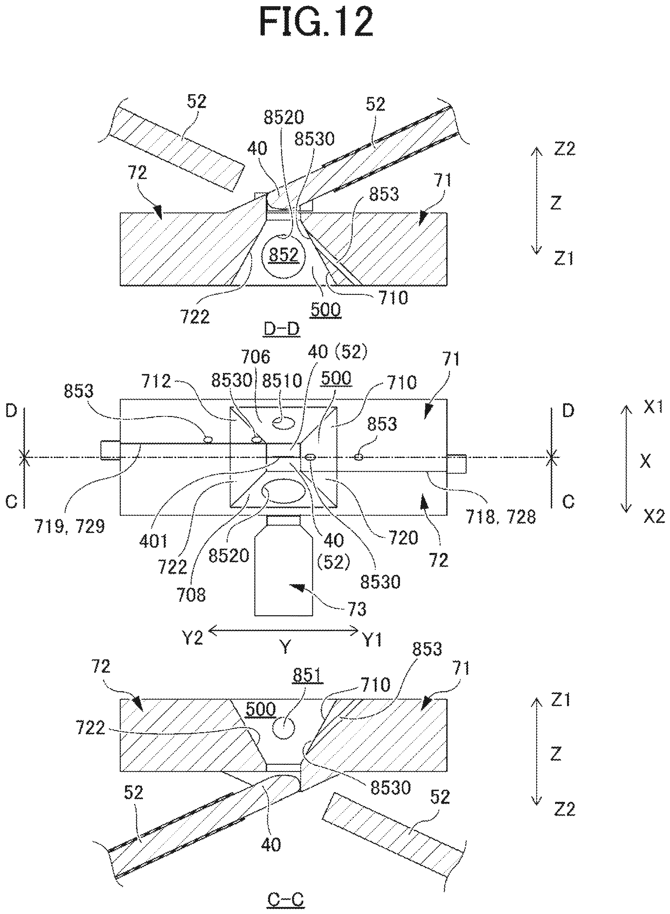

FIG. 10 is an exploded perspective view of the jig 70, and FIG. 11 show two orthographic views of the jig 70, namely a side view and a sectional view showing a section taken along line B-B. FIG. 12 shows three orthographic views of the jig 70, namely a plan view and sectional views along two directions (sections taken along line C-C and line D-D). FIGS. 10 to 12 schematically show a part (portion including the distal end 40) of each of a pair of coil pieces 52 to be joined together. Hereinafter, the "pair of coil pieces 52" refers to the coil pieces 52 to be clamped by the jig 70.

In FIG. 10, the X direction along the radial direction, the X1 side, and the X2 side are defined, and the Y direction along the circumferential direction, the Y1 side, and the Y2 side are also defined. The Z direction along the axial direction, the Z1 side, and the Z2 side are also defined in FIG. 10. In the following description, it is assumed for convenience that the Z direction is the up-down direction and the Z1 side is the upper side. However, the jig 70 may be disposed in such a manner that the Z direction does not coincide with the direction of gravity.

The jig 70 includes the jig member 71 (hereinafter also referred to as "radially inner jig member 71"), the jig member 72 disposed radially outward of (on the X2 side in the X direction of) the jig member 71 (hereinafter also referred to as "radially outer jig member 72"), and the jig member 73.

The radially inner jig member 71 and the radially outer jig member 72 are movable with respect to each other. For example, the radially inner jig member 71 is movable in the circumferential direction with respect to the radially outer jig member 72. The radially inner jig member 71 cooperates with the radially outer jig member 72 and the jig member 73 to switch the state of the pair of coil pieces 52 between the clamped state in which the pair of coil pieces 52 is restrained with respect to the jig 70 and the non-clamped state in which the pair of coil pieces 52 is not restrained with respect to the jig 70. FIGS. 10 to 12 show the jig 70 when the clamped state of the pair of coil pieces 52 is attained.

The radially inner jig member 71 has mating surfaces 718, 719 that face the radially outer jig member 72 in the clamped state. The mating surface 718 is substantially parallel to the mating surface 719 and is offset radially outward with respect to the mating surface 719. The expression "substantially parallel" is intended not to be limited to exactly parallel, and is a concept that allows deviations of, for example, about 10%. In this case, the mating surface 718 may be offset radially outward with respect to the mating surface 719 by a dimension corresponding to the thickness (radial thickness) of the pair of coil pieces 52. The distal ends 40 of the pair of coil pieces 52 can be appropriately restrained (clamped) by using such an offset.

In the clamped state, the radially inner jig member 71 contacts the radially inner coil piece 52 of the pair of coil pieces 52 in the circumferential direction (see FIG. 12) to restrain circumferential displacement of the radially inner coil piece 52. In the clamped state, the jig member 71 contacts the radially inner coil piece 52 of the pair of coil pieces 52 in the radial direction (see FIG. 11) to restrain radial displacement of the pair of coil pieces 52.

The radially outer jig member 72 has mating surfaces 728, 729 that face the radially inner jig member 71 in the clamped state. The mating surface 728 is substantially parallel to the mating surface 729 and is offset radially outward with respect to the mating surface 729. In this case, the mating surface 728 may be offset radially outward with respect to the mating surface 729 by a dimension corresponding to the thickness (radial thickness) of the pair of coil pieces 52. The distal ends 40 of the pair of coil pieces 52 can be appropriately restrained (clamped) by using such an offset.

In the clamped state, the radially outer jig member 72 contacts the radially outer coil piece 52 of the pair of coil pieces 52 in the circumferential direction (see FIG. 12) to restrain circumferential displacement of the radially outer coil piece 52.

The jig member 73 is movable in the radial direction with respect to the radially outer jig member 72. In the clamped state, the jig member 73 contacts the radially outer coil piece 52 of the pair of coil pieces 52 from the radially outer side (see FIG. 11). At this time, the jig member 73 contacts the overlapping portion (see FIG. 7) of the pair of coil pieces 52 (see FIG. 11). The jig member 73 restrains radial displacement of the pair of coil pieces 52 by pressing the pair of coil pieces 52 against the radially inner jig member 71 (see FIG. 11). That is, the jig member 73 cooperates with the radially inner jig member 71 to hold the pair of coil pieces 52 therebetween in the radial direction, and thus restrains radial displacement of the pair of coil pieces 52.

According to the jig 70 of the present embodiment, the clamped state in which radial and circumferential displacement of the pair of coil pieces 52 is restrained can be created by using substantially two movable portions (jig member 71 and jig member 73).

In the present embodiment, in the clamped state, the jig 70 forms the above-described cavity 500 above the pair of coil pieces 52. That is, the jig 70 restrains the pair of coil pieces 52 in the circumferential direction and the radial direction in the lower side of the cavity 500, as described above. The cavity 500 is substantially closed on its lower side (Z2 side in the Z direction) by the pair of coil pieces 52, and is open on its upper side (Z1 side in the Z direction). As described above, the upper opening is for radiation of the laser beam 110 from the laser radiation means 89.

The jig 70 preferably forms the cavity 500 such that the center of the cavity 500 is located at the center of the overlapping portion (see FIG. 7) of the distal ends 40 of the pair of coil pieces 52 as viewed in the axial direction. In this case, the radial center of the cavity 500 is located at the position of the contact surface 401 (see FIG. 8) between the distal ends 40 of the pair of coil pieces 52, and the circumferential center of the cavity 500 is located at the circumferential center of the overlapping portion (center of the circumferential range D1 of the welding target portion 90 shown in FIG. 7).

The cavity 500 is closed on its radial inner side by a radial side wall 706 of the radially inner jig member 71, and is closed on its radial outer side by a radial side wall 708 of the radially outer jig member 72.

The cavity 500 is closed on its one side in the circumferential direction (Y1 side) by a circumferential side wall 710 of the radially inner jig member 71 and a circumferential side wall 720 of the radially outer jig member 72. The side wall 710 and the side wall 720 are continuous in the radial direction with slight radial clearance between the mating surfaces 718, 728. This clearance may have a minimum dimension that allows the radially inner jig member 71 to move with respect to the radially outer jig member 72 in the circumferential direction.

The cavity 500 is closed on the other side in the circumferential direction (Y2 side) by a circumferential side wall 712 of the radially inner jig member 71 and a circumferential side wall 722 of the radially outer jig member 72. The side wall 712 and the side wall 722 are continuous in the radial direction with slight radial clearance between the mating surfaces 719, 729. This clearance may have a minimum dimension that allows the radially inner jig member 71 to move with respect to the radially outer jig member 72 in the circumferential direction.

The cavity 500 is in such a form that the sectional area (sectional area along an XY plane) increases toward the upper side. That is, the cavity 500 is in a tapered form. The degree of tilt of the tapered form may be set according to the variable range of the radiation angle of the laser beam 110 from the laser radiation means 89. The opening area on the upper side of the cavity 500 (opening area communicating with the outside) can thus be minimized according to the variable range of the radiation angle of the laser beam 110. The variable range of the radiation angle of the laser beam 110 may be determined according to the length (e.g., circumferential length) of the welding target portion 90.

In the present embodiment, the jig 70 has a channel structure that connects each of the positive pressure source 811, the negative pressure source 812, and the inert gas source 820 of the above gas supply means 80 to the cavity 500.

Specifically, in the present embodiment, the jig 70 has a blow channel 851, a vacuum channel 852, and an inert gas channel 853 as the channel structure that connects each of the positive pressure source 811, the negative pressure source 812, and the inert gas source 820 to the cavity 500.

The blow channel 851 connects the positive pressure source 811 to the cavity 500. That is, one end of the blow channel 851 connects to the positive pressure source 811, and the other end thereof is open to the cavity 500. The blow channel 851 is formed in the jig 70. The blow channel 851 that is open to a desired position in the cavity 500 can thus be easily formed. The blow channel 851 is preferably formed in the radially inner jig member 71 of the jig 70. In this case, an opening portion 8510 of the blow channel 851 (opening portion 8510 on the cavity 500 side) can be oriented radially outward. It is therefore possible to form an air flow (blow) directed radially outward.

In the example shown in FIGS. 10 to 12, the opening portion 8510 of the blow channel 851 (opening portion 8510 on the cavity 500 side) is formed in the radial side wall 706 of the radially inner jig member 71. That is, the blow channel 851 is open to the cavity 500 in the radial direction from the radially inner side. The blow channel 851 preferably applies a positive pressure above the distal ends 40 (welding target portion 90) of the pair of coil pieces 52. Accordingly, an air flow for spatter removal can be formed above the welding target portion 90 in a manner that is less likely to inhibit accumulation (stagnation) of inert gas, which will be described later, near the distal ends 40 (welding target portion 90) of the pair of coil pieces 52.

The blow channel 851 extends linearly in a direction (radial direction) substantially at right angle to the axial direction in a section immediately before the opening portion 8510 (opening portion 8510 on the cavity 500 side). The expression "substantially at right angle" is intended not to be limited to exact right angle, and is a concept that allows deviations of, for example, about 10%. Accordingly, an air flow can be created that is less likely to inhibit accumulation (stagnation) of inert gas, which will be described later, near the distal ends 40 (welding target portion 90) of the pair of coil pieces 52 compared to the case where, for example, the blow channel 851 extends obliquely downward like a pair of inert gas channels 853. That is, when air discharged from the blow channel 851 directly hits the distal ends 40 (welding target portion 90) of the pair of coil pieces 52, inert gas, which will be described later, supplied near the distal ends 40 (welding target portion 90) of the pair of coil pieces 52 may be blown away and partially replaced with the air. Such a disadvantage can be effectively reduced by extending the blow channel 851 linearly substantially in the XY plane in the section immediately before the opening portion 8510. The expression "substantially in the XY plane" does not necessarily refer to being exactly parallel to the XY plane, and is a concept that allows a certain level of deviations (e.g., deviations of about 10%). A portion of the blow channel 851 that extends in the radial direction is shown in the example of FIGS. 10 to 12. However, the blow channel 851 may include a portion extending upward in the axial direction toward the positive pressure source 811 in, for example, a section that is not shown.

The opening portion 8510 of the blow channel 851 preferably has a relatively small opening area and may be in the form of, for example, a nozzle. In the present embodiment, the opening portion 8510 has a significantly smaller opening area than an opening portion 8520 of the vacuum channel 852 (opening portion 8520 on the cavity 500 side) that will be described later. This can efficiently increase the flow velocity of air discharged from the opening portion 8510 into the cavity 500 through the blow channel 851. The higher the flow velocity of air discharged from the opening portion 8510 into the cavity 500 through the blow channel 851, the higher the capability to remove spatter that may be generated during laser welding to the outside of the cavity 500 (removing spatter by guiding it into the vacuum channel 852).

The vacuum channel 852 connects the negative pressure source 812 to the cavity 500. That is, one end of the vacuum channel 852 connects to the negative pressure source 812, and the other end thereof is open to the cavity 500. The vacuum channel 852 is formed in the jig 70. The vacuum channel 852 that is open to a desired position in the cavity 500 can thus be easily formed. The vacuum channel 852 is preferably formed in the radially outer jig member 72 of the jig 70. In this case, air inside the cavity 500 (air that may contain spatter) collected via the vacuum channel 852 can be easily discharged to the outside of the jig 70 in the radial direction. A relatively larger space is available on the radially outer side than on the radially inner side, and a configuration (not shown) for treating the air inside the cavity 500 (air that may contain spatter) collected via the vacuum channel 852 can be more easily disposed on the radially outer side.

In the example shown in FIGS. 10 to 12, the opening portion 8520 of the vacuum channel 852 (opening portion 8520 on the cavity 500 side) is formed in the radial side wall 708 of the radially outer jig member 72. That is, the vacuum channel 852 is open to the cavity 500 in the radial direction from the radially outer side. The vacuum channel 852 preferably applies a negative pressure above the pair of coil pieces 52 (welding target portion 90). Accordingly, an air flow for spatter removal can be formed above the welding target portion 90 in a manner that is less likely to inhibit accumulation (stagnation) of inert gas, which will be described later, near the distal ends 40 (welding target portion 90) of the pair of coil pieces 52.

A portion of the vacuum channel 852 that extends in the radial direction is shown in the example of FIGS. 10 to 12. However, the vacuum channel 852 may include a portion extending upward in the axial direction toward the negative pressure source 812 in, for example, a section that is not shown.

The vacuum channel 852 preferably faces the blow channel 851 in the radial direction with the cavity 500 interposed therebetween. In this case, the opening portion 8520 of the vacuum channel 852 (opening portion 8520 on the cavity 500 side) preferably faces the opening portion 8510 of the blow channel 851 in the radial direction with the cavity 500 interposed therebetween. This allows air discharged from the opening portion 8510 of the blow channel 851 (air that carries spatter) to be guided into the vacuum channel 852 along a straight radial path. Specifically, the vacuum channel 852 can cooperate with the blow channel 851 to form an air flow that crosses the Z direction (e.g., an air flow substantially parallel to the XY plane) above the distal ends 40 (welding target portion 90) of the pair of coil pieces 52. Accordingly, an air flow can be effectively formed that is less likely to inhibit accumulation (stagnation) of inert gas, which will be described later, near the distal ends 40 (welding target portion 90) of the pair of coil pieces 52. Moreover, as the distance of the section extending through the cavity 500 from the opening portion 8510 of the blow channel 851 to the opening portion 8520 of the vacuum channel 852 is minimized, pressure loss is minimized, so that a positive pressure and a negative pressure can be efficiently applied to the cavity 500.

The opening portion 8520 of the vacuum channel 852 (opening portion 8520 on the cavity 500 side) preferably has a relatively large opening area. In the present embodiment, the opening portion 8520 has a relatively large opening area, and as described above, the opening area of the opening portion 8520 is significantly larger than that of the opening portion 8510 of the blow channel 851 (opening portion 8510 on the cavity 500 side). This allows most of spatter blown away by the air from the blow channel 851 to be directly guided into the opening portion 8520 of the vacuum channel 852, so that the amount of spatter that may adhere to the radial side wall 708 (surface around the opening portion 8520) can be efficiently reduced.

The inert gas channel 853 connects the inert gas source 820 to the cavity 500. That is, one end of the inert gas channel 853 connects to the inert gas source 820, and the other end thereof is open to the cavity 500. The inert gas channel 853 is formed in the jig 70. The inert gas channel 853 that is open to a desired position in the cavity 500 can thus be easily formed.

A pair of inert gas channels 853 is preferably formed for each cavity 500. This allows inert gas flows from two directions to be mixed above the distal ends 40 (welding target portion 90) of the pair of coil pieces 52, so that accumulation (stagnation) of the inert gas can be effectively stabilized. The quality of the welded portion can be effectively improved when the above laser welding is performed with stable accumulation of the inert gas.

The inert gas channel 853 is preferably open to the cavity 500 at a position below the opening portion 8510 of the blow channel 851 and the opening portion 8520 of the vacuum channel 852. Accordingly, accumulation (stagnation) of inert gas can be formed above the distal ends 40 (welding target portion 90) of the pair of coil pieces 52 in a manner that is less susceptible to the air flow supplied from the first gas supply means 81. The velocity (flow velocity) of the inert gas supplied from the pair of inert gas channels 853 to the cavity 500 is significantly lower than the velocity (flow velocity) of the air supplied from the blow channel 851. The inert gas supplied from the pair of inert gas channels 853 to the cavity 500 may be supplied in such a manner as to completely compensate for the amount of inert gas that may be discharged via the vacuum channel 852.

The pair of inert gas channels 853 preferably faces each other in the circumferential direction with the cavity 500 interposed therebetween. In this case, the inert gas can be supplied from the two opposite directions in the circumferential direction (direction parallel to the contact surface 401 between the distal ends 40 of the pair of coil pieces 52). Therefore, the inert gas can be efficiently supplied to the welding target portion 90 located in the circumferential center of the cavity 500. As a result, the inert gas distribution above the contact surface 401 between the distal ends 40 of the pair of coil pieces 52 can be made uniform in the circumferential direction. The welding quality can be therefore improved over the entire circumferential range D1 of the welding target portion 90. In a modification, the inert gas may be supplied from three or more different directions.

The pair of inert gas channels 853 is preferably open to the cavity 500 obliquely downward in the circumferential direction. This allows the inert gas to be supplied from above the distal ends 40 (welding target portion 90) of the pair of coil pieces 52 directly toward the distal ends 40 (welding target portion 90) of the pair of coil pieces 52. In the present embodiment, as shown in FIG. 12, the pair of inert gas channels 853 is tilted in such a manner that the angle of the pair of inert gas channels 853 to the XY plane is smaller than the angle of the circumferential side walls 712, 710 to the XY plane as viewed in the radial direction (e.g., at an angle of about 45 degrees). However, in a modification, one or both of the pair of inert gas channels 853 may extend linearly substantially in the XY plane in the section immediately before the opening portion 8530 like the blow channel 851 described above. The expression "substantially in the XY plane" does not necessarily refer to being exactly parallel to the XY plane, and is a concept that allows a certain level of deviations (e.g., deviations of about 10%).

The pair of inert gas channels 853 is preferably formed in either the radially inner jig member 71 or the radially outer jig member 72 so as to face each other in the circumferential direction with the cavity 500 interposed therebetween. In this case, the configurations related to the second gas supply means 82 can be more efficiently arranged compared to the case where, for example, one inert gas channel 853 is formed in each of the radially inner jig member 71 and the radially outer jig member 72. For example, when a common inert gas source 820 is connected to the pair of inert gas channels 853, a path for such connection (not shown) can have a common portion.

In the present embodiment, as an example, a pair of inert gas channels 853 is provided in the radially inner jig member 71. However, in a modification, an inert gas channel 853 may be provided in each of the radially inner jig member 71 and the radially outer jig member 72, or a pair of inert gas channels 853 may be provided in the radially outer jig member 72.

In the present embodiment, both of the pair of inert gas channels 853 are formed in the radially inner jig member 71. Therefore, the opening portions 8530 of the pair of inert gas channels 853 (opening portions 8530 on the cavity 500 side) face each other in the circumferential direction while being slightly offset from each other in the radial direction. Specifically, of the pair of inert gas channels 853, the inert gas channel 853 on the Y1 side in the Y direction has the opening portion 8530 in the side wall 710 of the radially inner jig member 71, and the inert gas channel 853 on the Y2 side in the Y direction has the opening portion 8530 in the side wall 712 of the radially inner jig member 71. In this case, as shown in FIG. 12, the opening portion 8530 in the side wall 710 may be formed at a radial position substantially corresponding to the radial center position of the cavity 500 (position of the contact surface 401 between the distal ends 40 of the coil pieces 52).

As described above, according to the jig 70 of the present embodiment, a clamped state in which the pair of coil pieces 52 is clamped can be created, and in this clamped state, the cavity 500 that is open substantially only on its upper side can be formed above the welding target portion 90 between the distal ends 40 of the pair of coil pieces 52. Accordingly, laser welding of the distal ends 40 can be performed inside the highly closed cavity 500, which enhances the effect of the inert gas from the second gas supply means 82 (effect of improving the welding quality).

According to the present embodiment, of the various opening portions to the cavity 500, the opening portions 8510, 8520 related to the first gas supply means 81 are located above the opening portions 8530 of the second gas supply means 82. Therefore, the air flow related to the first gas supply means 81 can be formed inside the cavity 500 in such a manner that does not significantly inhibit the function of the inert gas supplied from the second gas supply means 82 (function to improve the welding quality). Accordingly, spatter can be removed in a manner that does not significantly inhibit the function of the inert gas (function to improve the welding quality), and the welding quality can be effectively improved.

According to the present embodiment, the opening portion 8510 of the blow channel 851 and the opening portion 8520 of the vacuum channel 852 face each other in the radial direction, and the opening portions 8530 related to the pair of inert gas channels 853 face each other in the circumferential direction. Therefore, the blow channel 851, the vacuum channel 852, and the pair of inert gas channels 853 can be efficiently formed in the jig 70. For example, in the case where the opening portion 8510 of the blow channel 851 and the opening portion 8520 of the vacuum channel 852 face each other in the radial direction and the opening portions 8530 related to the pair of inert gas channels 853 also face each other in the radial direction, it is difficult to form the blow channel 851, the vacuum channel 852, and the pair of inert gas channels 853 in the jig 70 in such a manner that the blow channel 851 and the vacuum channel 852 do not communicate with the pair of inert gas channels 853. This may complicate the jig configuration. According to the present embodiment, it is easy to form the blow channel 851, the vacuum channel 852, and the pair of inert gas channels 853 in the jig 70 in such a manner that the blow channel 851 and the vacuum channel 852 do not communicate with the pair of inert gas channels 853. In a modification, however, the opening portion 8510 of the blow channel 851 and the opening portion 8520 of the vacuum channel 852 may face each other in the radial direction and the opening portions 8530 related to the pair of inert gas channels 853 may also face each other in the radial direction. Alternatively, the opening portion 8510 of the blow channel 851 and the opening portion 8520 of the vacuum channel 852 may face each other in the circumferential direction and the opening portions 8530 related to the pair of inert gas channels 853 may also face each other in the circumferential direction.

According to the present embodiment, the opening portion 8510 of the blow channel 851 and the opening portion 8520 of the vacuum channel 852 face each other in the radial direction, the opening portions 8530 related to the pair of inert gas channels 853 face each other in the circumferential direction, and the opening portion 8510 and the opening portion 8520 are offset in the up-down direction from the opening portions 8530. Accordingly, it is easy to form the supply path for the air for spatter removal and the supply path for the inert gas at desired positions that suit their purposes in such a manner that these supply paths are less likely to interfere with each other. For example, the air for spatter removal can be supplied so as to pass substantially through the center of the welding target portion 90 as viewed in the axial direction, and the inert gas can be supplied so as to stagnate substantially at the center of the welding target portion 90.

In the present embodiment, the opening portion 8510 of the blow channel 851 and the opening portion 8520 of the vacuum channel 852 face each other in the radial direction, and the opening portions 8530 related to the pair of inert gas channels 853 face each other in the circumferential direction. However, this may be opposite. That is, the opening portion 8510 of the blow channel 851 and the opening portion 8520 of the vacuum channel 852 may face each other in the circumferential direction, and the opening portions 8530 related to the pair of inert gas channels 853 may face each other in the radial direction. In this case, however, it is necessary to form the pair of inert gas channels 853, one in each of the radially inner jig member 71 and the radially outer jig member 72. This may be disadvantageous because it tends to complicate the configuration (e.g., configuration of pipes etc.).

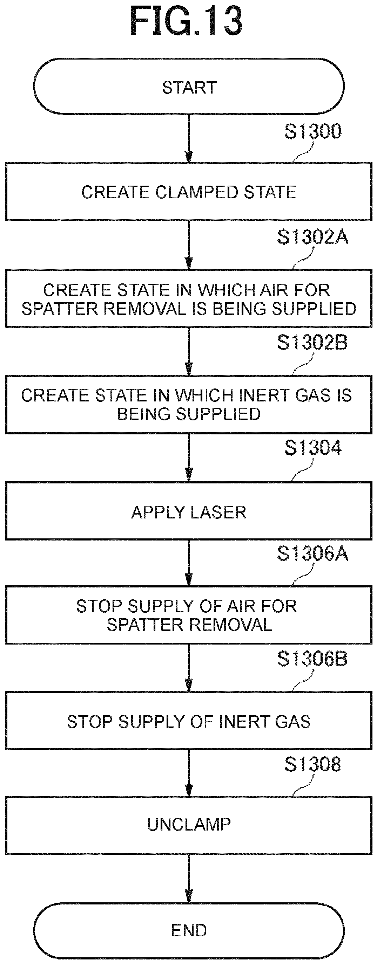

Next, a method for manufacturing the stator 21 by the manufacturing device 7 will be described as part of a method for manufacturing the stator 21 with reference to FIG. 13 and the subsequent figures.

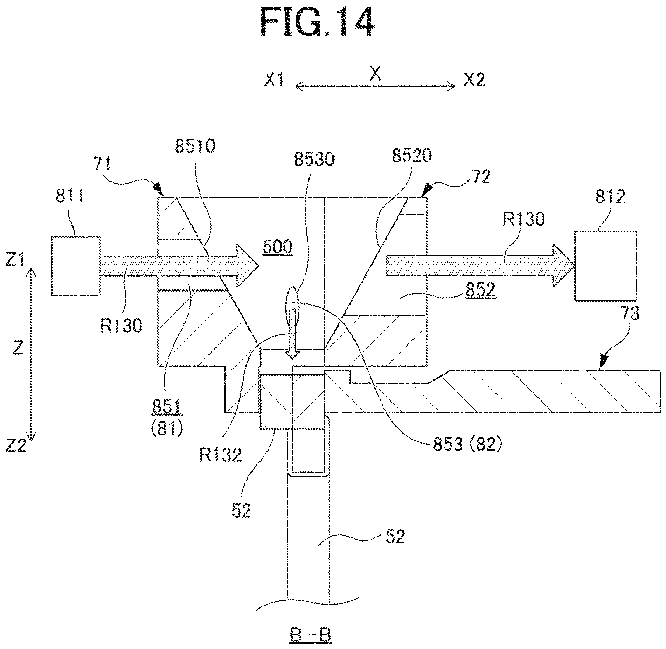

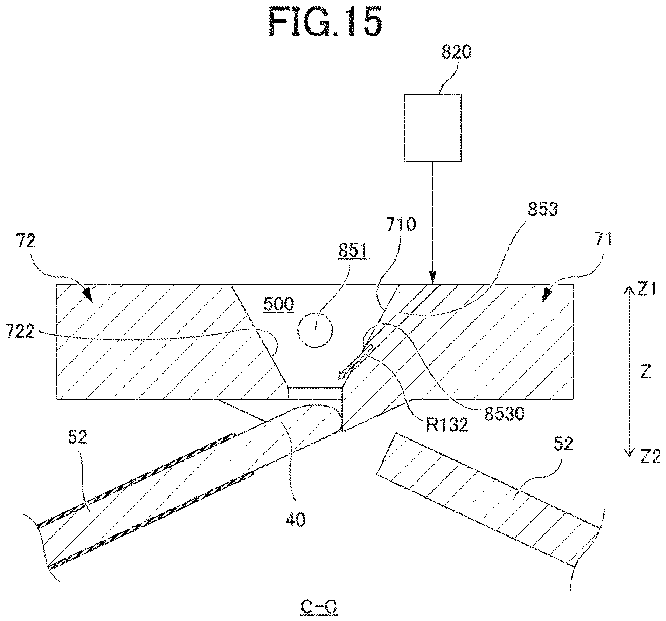

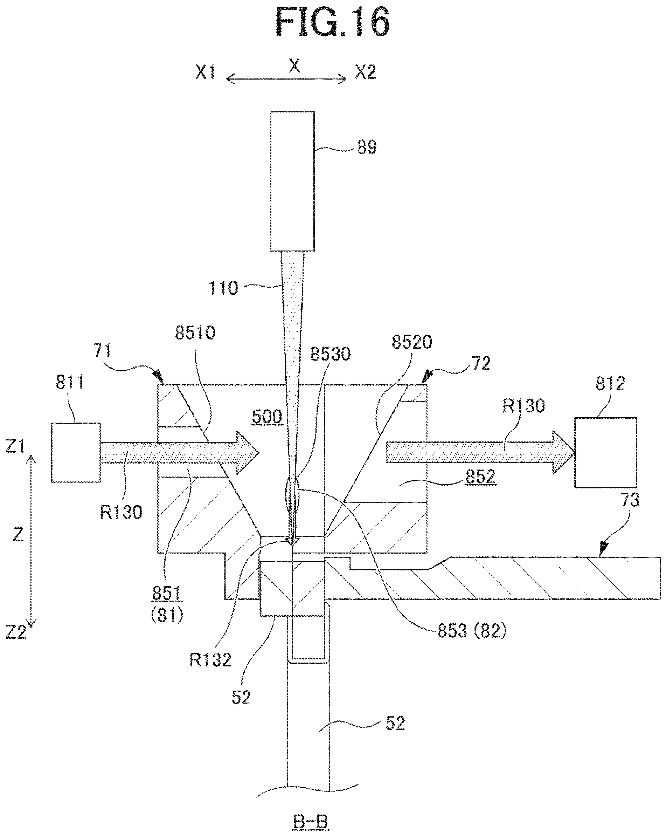

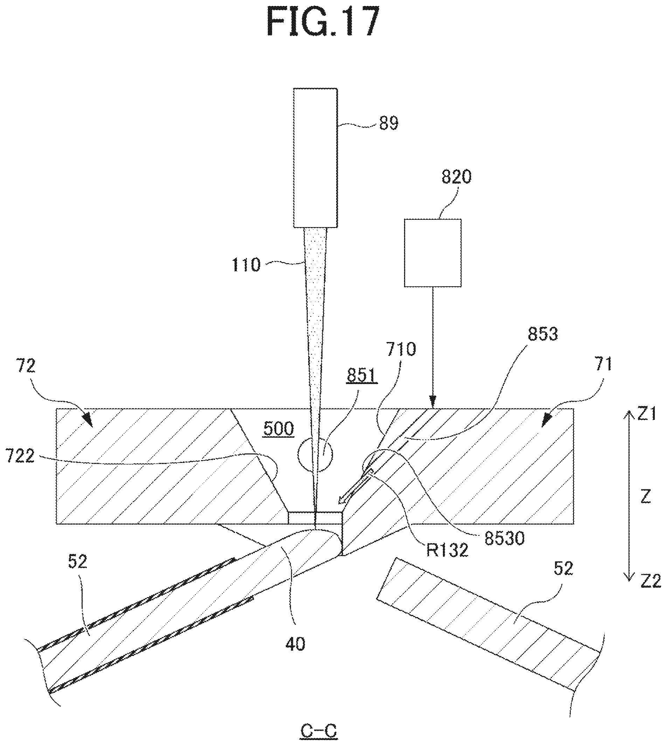

FIG. 13 is a flowchart schematically showing the flow of the method for manufacturing the stator 21 by the manufacturing device 7 (hereinafter also referred to as "this manufacturing method"). FIGS. 14 to 17 are illustrations of specific steps of this manufacturing method. FIGS. 14 and 15 are diagrams schematically showing air for spatter removal and inert gas being supplied to a pair of coil pieces 52 that is a workpiece, as viewed in two directions. FIGS. 16 and 17 are diagrams schematically showing laser welding being performed while the air for spatter removal and the inert gas are being supplied to the pair or coil pieces 52, as viewed in the two directions. In FIGS. 14 to 17, only a portion related to the manufacturing device 7 is schematically shown, and the gas flows are shown by arrows R130, R132. The laser beam 110 is schematically shown in FIGS. 16 and 17.

First, this manufacturing method includes a clamping step of creating a clamped state in which the pair of coil pieces 52 is restrained using the jig 70 (step S1300). That is, in the clamping step (step S1300), the clamped state is created by positioning the radially inner jig member 71 and the jig member 73 together with the pair of coil pieces 52 in a predetermined clamping positional relationship with respect to the radially outer jig member 72. In the clamped state, as described above, the distal ends 40 of the pair of coil pieces 52 are kept in contact with each other, and the cavity 500 that exposes the distal ends 40 in contact with each other to the outside.

Next, this manufacturing method includes a gas supply step of supplying gas to the cavity 500 (step S1302). In this manufacturing method, the gas supply step (step S1302) includes a first gas supply step (step S1302A) and a second gas supply step (step S1302B).

Specifically, in this manufacturing method, the first gas supply step (step S1302A) creates the state in which air for spatter removal is being supplied to the cavity 500 using the first gas supply means 81. In this manufacturing method, the second gas supply step (step S1302B) creates the state in which inert gas is being supplied to the cavity 500 using the second gas supply means 82. The first gas supply means 81 and the second gas supply means 82 are as described above.

Either the first gas supply step (step S1302A) or the second gas supply step (step S1302B) may be started first, or the first gas supply step (step S1302A) and the second gas supply step (step S1302B) may be started at the same time.

When the gas supply step (step S1302) is performed in this manner, the state in which air is being supplied to the cavity 500 (see arrow R130) and the state in which inert gas is being supplied to the cavity 500 (see arrow R132) can be attained simultaneously, as shown in FIGS. 14 and 15.

Thereafter, this manufacturing method includes a welding step of joining the distal ends 40 together by laser welding by applying the laser beam 110 to the welding target portion 90 of the pair of coil pieces 52 using the laser radiation means 89 (step S1304).

In the present embodiment, the welding step (step S1304) is performed while maintaining the state in which both air and inert gas are being supplied to the cavity 500 (see arrows R130, R132), as shown in FIGS. 16 and 17. As a result, the inert gas from the second gas supply means 82 functions as a shielding gas, so that the welding quality is improved. Moreover, spatter that may be generated during the laser welding can be instantly removed from the cavity 500 as soon as it is generated. An appropriate spatial environment can thus be created for the laser radiation path from the laser radiation means 89 to the welding target portion 90. Therefore, the welding quality can be effectively improved.

Subsequently, this manufacturing method includes a gas supply stop step of discontinuing the state in which gas is being supplied to the cavity 500 (step S1306) after the welding step (step S1304) ends. The gas supply stop step (step S1306) includes a first stop step of stopping the air supply from the first gas supply means 81 (step S1306A) and a second stop step of stopping the inert gas supply from the second gas supply means 82 (step S1306B).

Either the first stop step (step S1306A) or the second stop step (step S1306B) may be started first, or the first gas stop step (step S1306A) and the second stop step (step S1306B) may be started at the same time.

Subsequently, this manufacturing method includes an unclamping step of releasing the pair of coil pieces 52 for which the laser welding has been completed from the clamped state (clamped state by the jig 70) (step S1308). The unclamping step (step S1308) may be implemented by positioning the radially inner jig member 71 and the jig member 73 in a predetermined unclamping positional relationship with respect to the radially outer jig member 72.

According to this manufacturing method, an appropriate spatial environment can be created for the laser radiation path from the laser radiation means 89 to the welding target portion 90 by creating the state in which both air and inert gas are being supplied to the cavity 500 (see arrows R130, R132). The welding step (step S1304) can be performed in this appropriate spatial environment. That is, the welding step (step S1304) can be performed while maintaining the state in which both air and inert gas are being supplied to the cavity 500 (see arrows R130. R132). As a result, the welding quality can be effectively improved.

For convenience of description, this manufacturing method relates to one pair of coil pieces 52. However, as described above, this manufacturing method can also be extended to a configuration in which the distal ends 40 of a plurality of pairs (e.g., 12 pairs) of coil pieces 52 are clamped simultaneously. In the configuration in which the distal ends 40 of a plurality of pairs of coil pieces 52 are clamped simultaneously, the clamping step (step S1300) and the unclamping step (step S1308) may be performed simultaneously for each of the plurality of pairs of coil pieces 52, and the steps from the gas supply step (step S1302) to the gas supply stop step (step S1306) may be performed simultaneously or sequentially for each of the plurality of pairs of coil pieces 52. The lead time related to this manufacturing method can thus be efficiently reduced compared to the case where various steps are performed for each pair.

Although the embodiments are described in detail above, the present disclosure is not limited to specific embodiments, and various modifications and changes can be made within the scope of the claims. It is also possible to combine all or part of the constituent elements of the embodiments described above. Of the effects of each embodiment, those related to dependent claims are additional effects distinct from generic concepts (independent claims).

Although the above embodiments relate to joining of the distal ends 40 of the coil pieces 52, the above embodiments are also applicable to joining of the distal end 40 of the coil piece 52 and the end of a busbar (not shown). In this case, the distal end 40 of the coil piece 52 to be joined to the end of the busbar may be a distal end of a crossover portion forming a power line or a neutral point.

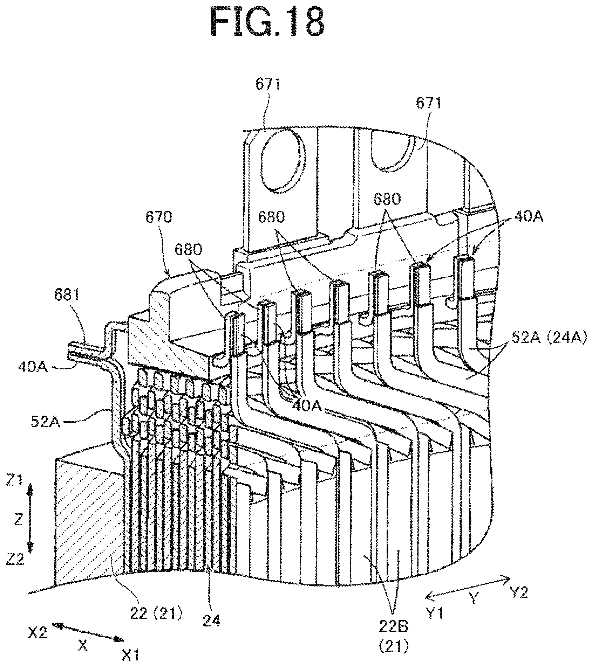

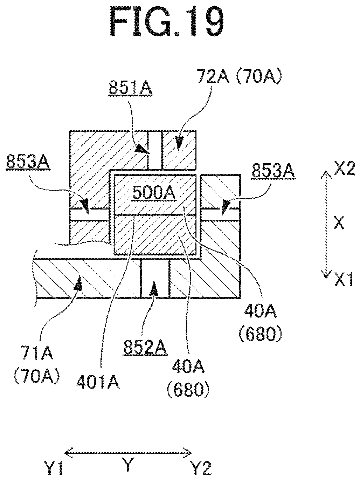

For example, FIG. 18 shows a perspective view of another applicable welding target portion. In FIG. 18, components that may be the same as those in the embodiments are denoted by the same signs as those in the embodiments. In the example shown in FIG. 18, ends 680, 681 of bus bars held by a terminal block 670 and distal ends 40A of coil pieces 52A for a stator coil 24A are joined to each other. In this case, part of the busbars held by the terminal block 670 is electrically connected to three-phase external terminals 671 inside the terminal block 670. Laser welding using the jig 70 according to the embodiment may be applied to the joining portions between the ends 680, 681 of the bus bars and the distal ends 40A of the coil pieces 52A. In this case, for example, the same functions those of the jig members 71, 72 described above may be implemented by jig members 71A, 72A forming a hook-shaped jig 70A, as shown in section in the axial direction in FIG. 19. In this case, the jig members 71A, 72A may form a cavity 500A above (on the Z1 side of) a contact surface 401A between the distal ends 40A. In this case, as shown in FIG. 19, the jig members 71A, 72A may form a blow channel 851A, vacuum channel 852A, and inert gas channel 853A that have the same functions as those of the blow channel 851, vacuum channel 852, and inert gas channel 853 of the jig 70 described above.

In the above embodiments, the first gas supply means 81 uses both the positive pressure source 811 and the negative pressure source 812. However, only the positive pressure source 811 or the negative pressure source 812 may be used. In this case as well, spatter that may be generated during laser welding can be effectively removed from inside the cavity 500. For example, when only the positive pressure source 811 is used, the vacuum channel 852 may function as a channel for collecting spatter etc. together with air injected from the blow channel 851. When only the negative pressure source 812 is used, the blow channel 851 may function as a channel that forms an air flow from the outside toward the cavity 500 due to the negative pressure from the negative pressure source 812.

### Description of the Reference Numerals

1 ... motor (rotating electrical machine), 12 ... rotation axis (central axis), 21 ... stator, 40 ... distal end, 52 ... coil piece (conductor piece), 500 ... cavity, 110 ... laser beam, 70 ... jig, 71, 71A ... jig member (first jig member), 72, 72A ... jig member (second jig member), 80 ... gas supply means, 81 ... first gas supply means, 82 ... second gas supply means, 811 ... positive pressure source (pressure source), 812 ... negative pressure source (pressure source), 820 ... inert gas source, 851 ... blow channel (first channel), 8510 ... opening portion (first opening portion), 852 ... vacuum channel (first channel), 8520 ... opening portion (first opening portion), 853 ... inert gas channel (second channel), 8530 ... opening portion (second opening portion), 89... laser radiation means

## Claims

1. A device for manufacturing a stator for a rotating electrical machine, the device comprising:
a jig configured to create a state in which distal ends of one conductor piece and another conductor piece for forming the stator of the rotating electrical machine are in contact with each other and to form a tubular cavity that exposes the distal ends in contact with each other to outside;
a laser radiation means configured to apply a laser beam from the outside through the cavity toward the distal ends in contact with each other; and
a gas supply means configured to supply gas to the cavity.

2. The device for manufacturing a stator for a rotating electrical machine according to claim 1, wherein the gas supply means includes
a first gas supply means configured to supply air to the cavity, and
a second gas supply means configured to supply an inert gas to the cavity.

3. The device for manufacturing a stator for a rotating electrical machine according to claim 2, wherein the first gas supply means is configured to supply the air to the cavity by generating either or both of a positive pressure and a negative pressure that force air out of the cavity.

4. The device for manufacturing a stator for a rotating electrical machine according to claim 3, wherein the first gas supply means is configured to supply the air to the cavity in such a manner as to form an air flow in a direction crossing a laser radiation direction from the laser radiation means.

5. The device for manufacturing a stator for a rotating electrical machine according to claim 3 or 4, wherein:
the first gas supply means includes
a pressure source including either or both of a positive pressure source and a negative pressure source, and
a first channel, one end of the first channel being connected to the pressure source and another end of the first channel being open to the cavity through a first opening portion;
the second gas supply means includes
an inert gas source, and
one or more second channels, one end of each of the second channels being connected to the inert gas source and another end of each of the second channels being open to the cavity through a second opening portion; and
the second opening portion is located farther from the laser radiation means than the first opening portion in the laser radiation direction from the laser radiation means.

6. The device for manufacturing a stator for a rotating electrical machine according to claim 5, wherein:
the first channel includes a positive pressure-side channel portion of which one end is connected to the positive pressure source, and a negative pressure-side channel portion of which one end is connected to the negative pressure source;
the first opening portion is located in each of another end of the positive pressure-side channel portion and another end of the negative pressure-side channel portion; and
the first opening portion on the positive pressure side and the first opening portion on the negative pressure side face each other with the cavity between the first opening portions in a direction crossing the laser radiation direction from the laser radiation means.

7. The device for manufacturing a stator for a rotating electrical machine according to claim 6, wherein the positive pressure-side channel portion extends linearly in a direction substantially at right angle to the laser radiation direction from the laser radiation means in a section leading to the first opening portion on the positive pressure side.

8. The device for manufacturing a stator for a rotating electrical machine according to claim 6 or 7, wherein the first channel and the one or more second channels are located in the jig.

9. The device for manufacturing a stator for a rotating electrical machine according to claim 8, wherein:
the jig includes a first jig member located on a radially inner side that is close to a central axis of the stator, and a second jig member located on a radially outer side;
the positive pressure-side channel portion is located in the first jig member; and
the negative pressure-side channel portion is located in the second jig member.

10. The device for manufacturing a stator for a rotating electrical machine according to claim 9, wherein the one or more second channels are located in either the first jig member or the second jig member.

11. The device for manufacturing a stator for a rotating electrical machine according to any one of claims 5 to 10, wherein a direction in which the inert gas is supplied from the second opening portion crosses a direction of an air flow that is formed by the first gas supply means, as viewed in the laser radiation direction from the laser radiation means.

12. The device for manufacturing a stator for a rotating electrical machine according to claim 11, wherein the one or more second channels are tilted in such a manner that the second opening portion side of the one or more second channels is located farther away from the laser radiation means in the laser radiation direction.

13. The device for manufacturing a stator for a rotating electrical machine according to any one of claims 5 to 12, wherein the second gas supply means is configured to supply the inert gas from two or more of the second channels that face each other with the cavity between the second channels toward the distal ends in contact with each other.

14. The device for manufacturing a stator for a rotating electrical machine according to any one of claims 1 to 13, wherein the jig simultaneously functions on a plurality of pairs of the conductor pieces so as to form separate cavities for each of the plurality of pairs of the conductor pieces.

15. A method for manufacturing a stator for a rotating electrical machine, the method comprising:
a clamping step of creating a state in which distal ends of one conductor piece and another conductor piece for forming the stator of the rotating electrical machine are in contact with each other, and forming a tubular cavity that exposes the distal ends in contact with each other to outside;
a gas supply step of supplying gas to the cavity after the clamping step; and
a welding step of joining the distal ends by laser welding by applying a laser beam from the outside through the cavity, the welding step being performed after the clamping step in a state in which the gas is being supplied by the gas supply step.

16. The method for manufacturing a stator for a rotating electrical machine according to claim 15, wherein the gas supply step includes supplying each of air and an inert gas.

17. The method for manufacturing a stator for a rotating electrical machine according to claim 16, wherein:
in the gas supply step, the inert gas is supplied toward the distal ends in contact with each other through a second channel having a second opening portion that is open to the cavity, while the air is supplied through a first channel having a first opening portion that is open to the cavity; and
the second opening portion is closer to the distal ends in contact with each other than the first opening portion in a laser radiation direction.
